# EUROPEAN PATENT SPECIFICATION

(11) **EP 2 746 061 B1**
(45) Date of publication and mention of the grant of the patent: **08.07.2020**
(21) Application number: 13194934.9
(22) Date of filing: 28.11.2013
(51) Int. Cl.: B60B 3/02, B60B 33/00

(54) **Wheel for trolleys and production method thereof**
Rolle für Transportwagen und Herstellungsverfahren dafür
Roue pour chariots et son procédé de production

(30) Priority: 20.12.2012 IT PD20120397
(43) Date of publication of application: 25.06.2014
(73) Proprietor: Tellure Rôta S.p.A., 41043 Formigine (MO) (IT)
(72) Inventor: Milelli, Matteo, I-42124 REGGIO EMILIA (IT); Borghi, Pierluigi, I-41122 MODENA (IT); Girlando, Simone, I-41125 MODENA (IT); Mercalli, Giorgio, I-41049 Sassuolo, MODENA (IT)
(74) Representative: Mitola, Marco

(56) References cited:
- DE-A1-102010 008 692
- US-A1- 2005 116 529
- US-A1- 2005 218 712
- US-A1- 2009 273 226

## Description

The present invention relates to a wheel for trolleys, and in particular a wheel for trolleys of the type with a solid polymer tread and production method thereof.

In the sector of transport trolleys, goods handling, lift-trucks and the like, the use of wheels comprising a hub, generally of metal material, coated on the outside with a solid polymer tread, is known of. The hub and the tread are generally joined by a chemical type adhesive. Such wheels may have the function of transmitting motion to the trolley (driving and/or steering) or simply supporting the load (idle).

During use, said wheels may be subjected to extremely heavy loads: for example a load of several tonnes may weigh on each wheel a trolley is fitted with. A wheel of a trolley may also reach very high specific loads, for example of over 150 kg/cm2 In addition, during rotation the wheel may rotate at a frequency ranging from 2 to approximately 10 Hz: this way at every turn the wheel, and in particular the tread thereof, is subjected to a repeated impulsive stress which is exercised on an extremely reduced contact surface of the tread.

The continued use of such wheels may cause rapid heating due essentially to hysteresis phenomena of the polymer tread. In fact, the tread is generally a solid band, that is to say without an inner tube, in polymer material, which can easily exceed temperatures of 70-80°. Often the treads are made from thermosetting materials which, when such temperatures are exceeded, tend to degrade. Degradation is understood to mean the plastic, that is to say permanent, deformation of the tread which, even following elimination of the load, is no longer able to elastically return to shape, in particular its cylindrical shape. Such phenomenon is amplified in that a plastic, that is to say permanent, deformation of the tread increases its overheating on account of rolling under load.

In addition, the adhesives generally used to join the tread and the hub are temperature-sensitive: the reaching of high temperatures may in fact lead to first to reversible phenomena and then, beyond a certain irreversible threshold, in terms of loss of function of said adhesive, may thus generate detachment phenomena, even localised, between the hub and solid tread.

To overcome such problems, it is known of in the art to oversize the wheels so as to distribute the loads over greater contact surfaces: thereby reducing the specific contact pressure on the tread and reducing the risk of overheating thereof.

Nonetheless such solutions are not optimal given that oversizing entails cost increases; in addition oversized wheels are in any case subject to overheating phenomena which may for example arise when the trolley is used in environments which are too hot, or on uneven ground. In fact, the roughness of the ground may create impulsive stresses well above the nominal design values.

It is also known of to use temperature and pressure sensors, external to the wheel, which read the temperature of the tread and measure the mechanical stresses during the rolling phase; such use is in particular known during the testing or laboratory control step.

The use of such sensors does not however provide reliable values given that the temperature at the core of the tread is often considerably higher than the external temperature, that is to say, of the contact surface with the ground.

It follows that measurements of the outer surface are not reliable and often fail to warn the user of inner yielding of the tread or of degradation phenomena of the adhesive placed at the interface between the hub and the solid polymer.

In addition such solutions do not adapt well to use on the field, in that the dimensions and positioning of the sensors becomes essential for their proper functioning.

Their application to wheels, in particular wheels with solid treads, so as to warn the user of the occurrence of overheating phenomena or in any case of the danger threshold being reached is subject to problems as yet unresolved in the positioning and connection thereof being overcome (including the choice of dimension of the sensors).

Moreover the solutions of the prior art do not permit monitoring of possible situations of overload of the wheels on account, for example, of uneven ground or of badly distributed loads applied to said trolley. In such case damage may occur, that is to say local yielding of the tread which jeopardises its cylindrical nature and which may thus lead not just to overheating of the deformed tread but also to premature deterioration of the other wheels. US-A-2009/0273226 discloses a prior solution according to the pre-characterising portion of claim 1.

The purpose of the present invention is to make a wheel for trolleys which overcome the drawbacks mentioned with reference to the prior art.

In particular, the purpose of the present invention is to detect the approach of irreversible deterioration phenomena of the wheels so as to be able to perform preventive and not corrective maintenance.

In other words, one purpose of the present invention is to give the user the chance to intervene on the working parameters of the trolley so as to avoid irreversible damage of its wheels.

Such purpose is achieved by a wheel for trolleys according to claim 1 and by a production method according to claim 11.

Other embodiments of the present invention are described in the subsequent claims.

Further characteristics and advantages of the present invention will be more clearly comprehensible from the description given below of its preferred and non-limiting embodiments, wherein:

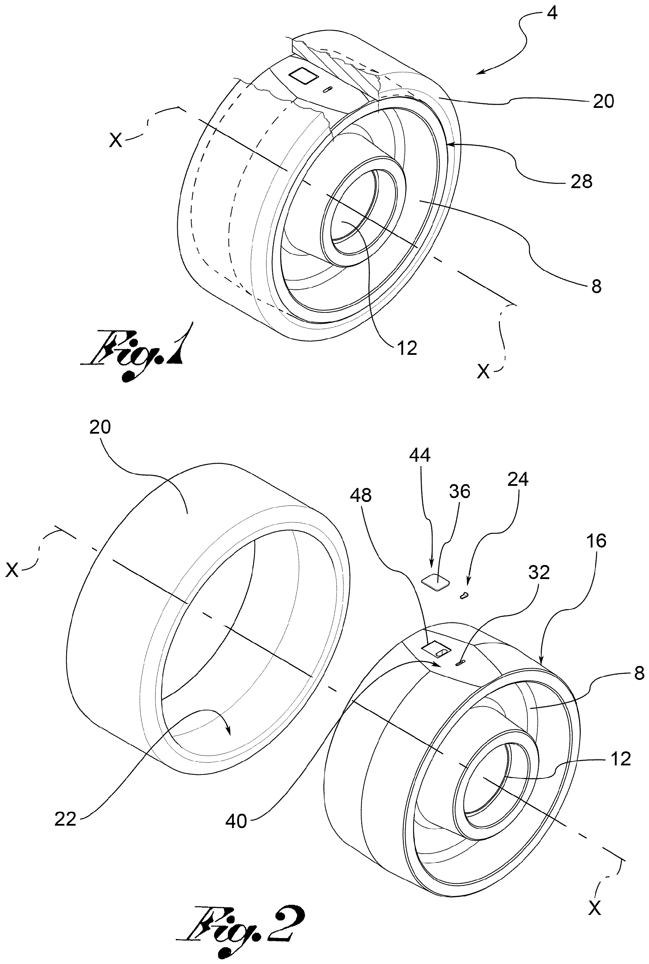

figure 1 shows a perspective view, in an assembled configuration, of a wheel according to a first embodiment of the present invention;
- figure 2 shows a perspective view in separate parts of the wheel in figure 1;

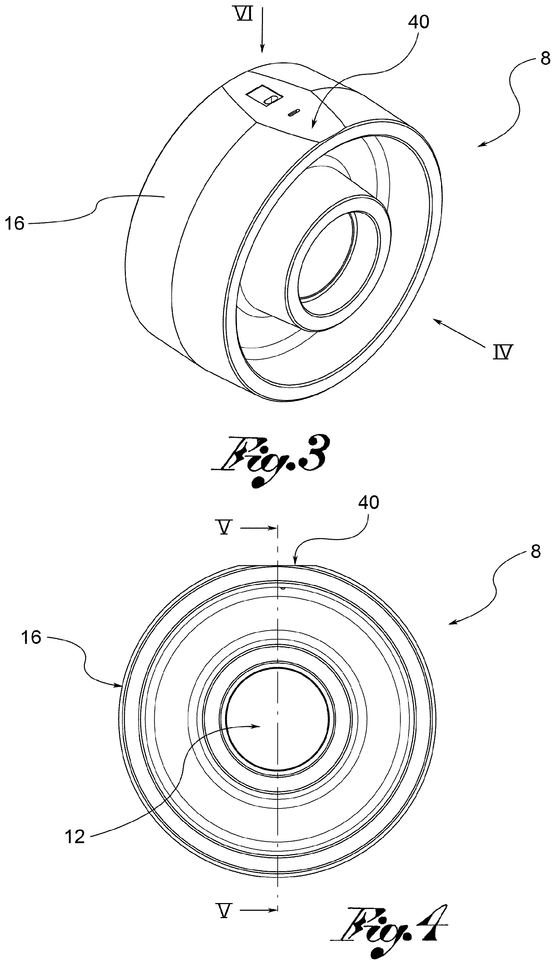

- figure 3 shows a perspective view of a hub of the wheel in figure 1;
figure 4 shows a front view of the hub in figure 3 from the side of the arrow IV in figure 3;

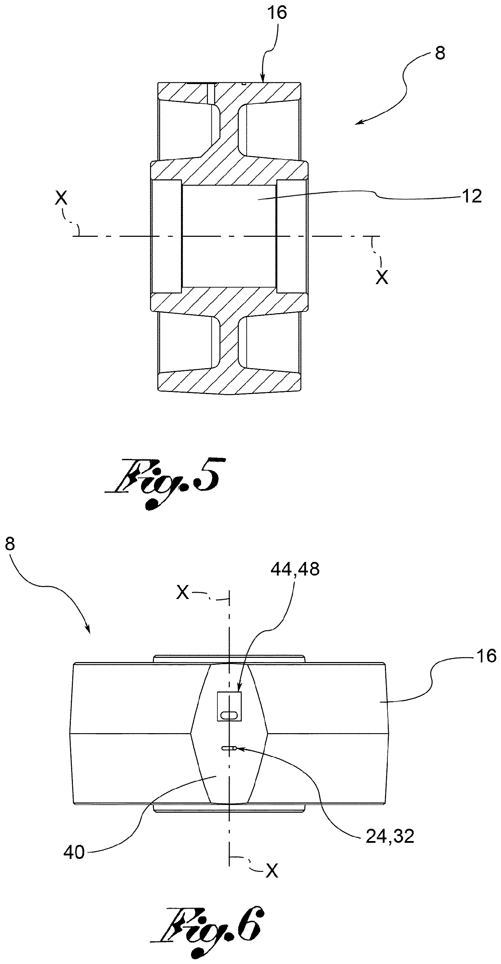

figure 5 shows a cross-section view of the hub in figure 4, along the cross-section plane V-V in figure 4;
figure 6 shows a plan view of the hub in figure 3 from the side of the arrow VI in figure 3;

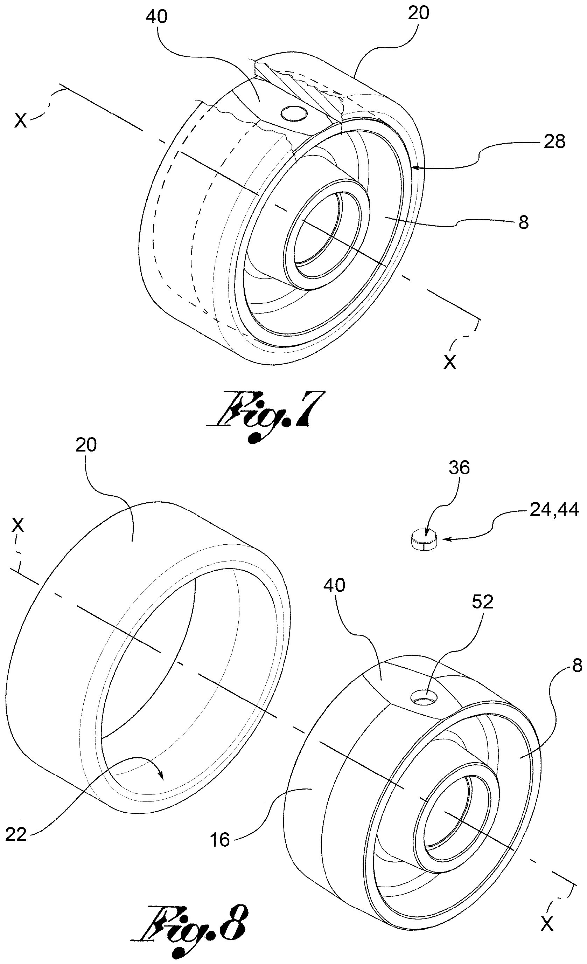

figure 7 shows a perspective view, in an assembled configuration, of a wheel according to a second embodiment of the present invention;
- figure 8 shows a perspective view in separate parts of the wheel in figure 7;

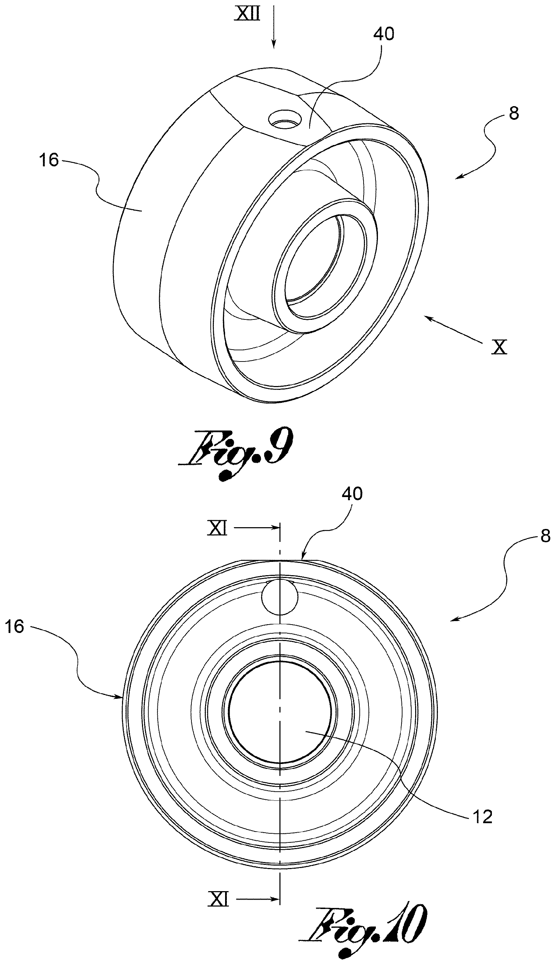

- figure 9 shows a perspective view of a hub of the wheel in figure 7;
figure 10 shows a front view of the hub in figure 9 from the side of the arrow X in figure 9;

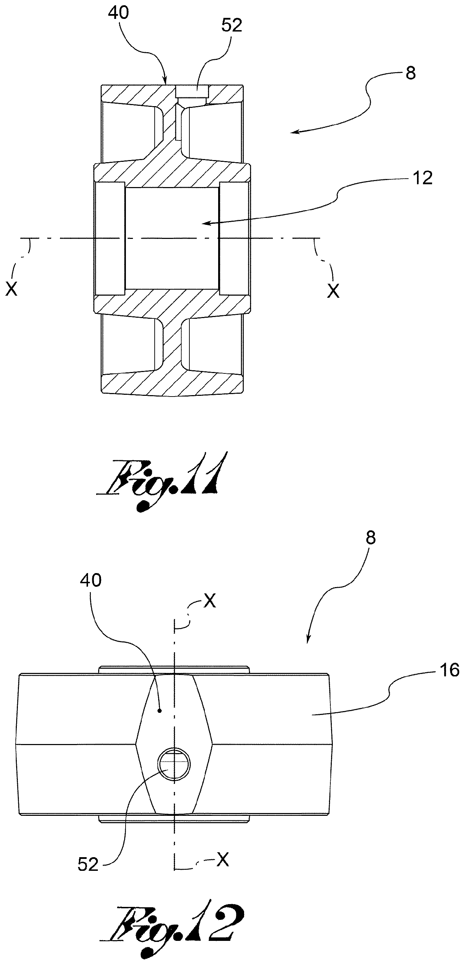

figure 11 shows a cross-section view of the hub in figure 10, along the cross-section plane XI-XI in figure 10;
figure 12 shows a plan view of the hub in figure 9, from the side of the arrow XII in figure 9.

The elements or parts of elements common to the embodiments described below will be indicated using the same reference numerals.

With reference to the aforementioned figures, reference numeral 4 globally denotes a wheel for trolleys. For the purposes of the present invention the definition of wheel for trolleys should be considered in its broadest sense, any type of transport trolley, lifttruck and the like being understood thereby.

The wheel for trolleys 4 comprises a hub 8 having a cylindrical seat 12 which defines a rotation axis X-X for the wheel. The hub 8 is defined by an outer cylindrical lateral wall 16. The hub 8 is preferably made of metal. For the purposes of the present invention the connection and support means of the wheel 4 which may for example provide for bearings, connection brackets and similar devices of the known type depending on the application of the wheel and the type of trolley it is destined for are not shown.

The wheel 4 according to the present invention comprises a tread 20, for example made by means of a typical casting process in open top moulds, of crosslinkable elastomer polymers, coaxial to the hub 8 in relation to the rotation axis X-X, wherein an inner wall 22 of the tread 20 is in direct contact with the outer cylindrical lateral wall 16 of the hub 8.

According to the invention, the hub 8 and the tread 20 are joined by an adhesive, preferably of the chemical type, applied between the inner wall 22 of the tread 20 and the outer cylindrical lateral wall 16 of the hub 8, that is to say at an interface 28 between the tread 20 and the hub 8.

The tread 20 is made of a polymer material and is solid. A polymer material is understood to mean any material originating from a polymer, whether pure or with reinforcement material of any type included in it. A solid tread is taken to mean that no inner tubes or vacuums are provided between the tread 20 and the hub 8; in other words, there is no interruption between the outer cylindrical lateral wall 16 and the tread 20.

The wheel 4 comprises at least one temperature sensor 24 applied at an interface 28 between the tread 20 and the hub 8, wherein the outer cylindrical lateral wall 16 of the hub 8 comprises a first seat 32 inside which said temperature sensor 24 is housed.

Advantageously, the temperature sensor 24 is fully housed in said first seat 32 so as to present a measurement head 36 flush with said interface 28 and with the inner wall 22 of the tread 20.

Such interface 28, as seen, may comprise a layer of adhesive, preferably of the chemical type.

According to one embodiment, said first seat 32 comes out on a flattening 40 made on the outer lateral cylindrical wall 16 and directly facing the inner wall 22 of the associable tread 20. The flattening has the technical effect of evenly dividing the forces which are transmitted internally from the tread to the sensor 24. Moreover, the flattening is substantially flat like the sensor so that it is subjected to a pure compression force, between the tread and the hub, and not to a bending force.

The temperature sensor 24 is anchored to the inside of said first seat 32; such anchorage may for example be realised by interference or by gluing.

According to one embodiment, the wheel 4 comprises a pressure sensor 44 applied at the interface 28 between the tread 20 and the hub 8, inside a second seat 48.

According to a possible embodiment, the pressure sensor 44 is a piezoelectric type sensor.

Said pressure sensor 44 is firmly anchored inside the second seat 48.

Preferably, a flattening 40 is made at said second seat 48, made on the outer lateral cylindrical wall 16 and directly facing the inner wall 22 of the associable tread 20. The flattening 40 has the technical effect of evenly dividing the forces which are transmitted internally from the tread to the pressure sensor 44. Moreover, the flattening 40 is substantially flat like the pressure sensor 44 so that it is subjected to a pure compression force, between the tread 20 and the hub 8, and not to a bending force. This way not only is the integrity of the pressure sensor 44 preserved but its ability to provide reliable measurements of the pressure is also guaranteed.

Preferably, the pressure sensor 44 has a measurement head 36 positioned flush with said interface 28 and with the inner wall 22 of the tread 20.

According to a preferred embodiment, the pressure sensor 44 and the temperature sensor 24 are integrated with each other and housed in a single seat 52.

For example, said pressure sensor 44 is a piezoresistive sensor integrated with the temperature sensor 24.

The temperature sensor and/or pressure sensor are powered by any power supply system integrated in the wheel. Such integrated power supply system may also be a self-powered system.

Preferably, the wheel 4 comprises a power supply and control unit operatively connected to said temperature 24 and/or pressure sensor 44, so as to exchange the data acquired from said sensors in real time with a wireless system. This way functioning anomalies can be signalled and counter measures implemented to prevent the breakage or irreversible deterioration of the wheel.

Wireless data transmission is advantageous in that it does not require the use of direct connections and permits remote monitoring of the functioning parameters of the individual wheel so as to intervene preventively on the functioning parameters and/or replacement of the wheel itself.

The method of making a wheel for trolleys according to the invention will now be described.

In particular a wheel hub 8 is initially prepared, defined by an outer cylindrical lateral wall 16 and a first seat 32 is made on said outer cylindrical lateral wall 16. The first seat 32 may be made in various ways, either by casting or moulding or by subsequent machine tool processing.

A temperature sensor 24 is then joined and solidly fixed inside said first seat 32, preferably so that said temperature sensor 24 is flush with said outer cylindrical lateral wall 16.

After preferably applying the adhesive, a solid polymer tread 20 is made around the hub 8 by casting liquid polymer in cross-linking phase so as to cover the outer lateral wall 16 of the hub 8 with the relative temperature sensor 24, which is thus embedded in the coating.

Preferably, a step is also provided for making a flattening 40 on the outer cylindrical lateral wall 16 before making the tread 20 by casting; the flattening 40 is made in the position provided for the realisation of the first seat 32.

According to a further embodiment, a step is provided for arranging a pressure sensor 44 inside a second seat 48 made on the outer cylindrical lateral wall 16 of the hub 8, having made a preliminary flattening 40 also at said second seat 48. The pressure sensor 44 is then firmly joined to the second seat 48 so as to bring a measurement head 36 of the pressure sensor 44 preferably flush with the flattening 40 on the outer lateral wall 16. The polymer tread 20 is then made on the appropriately glued hub 8 by casting so as to cover the temperature and/or pressure sensor 24, 44.

Preferably, a single seat 52 is prepared on the outer cylindrical lateral wall 16, a single pressure and temperature sensor 24, 44 is joined inside said single seat 52 and the polymer tread 20 is made on the appropriately glued hub 8 by casting so as to cover the temperature and pressure sensor 24, 44.

As may be seen from the description, the present invention makes it possible to overcome the drawbacks of the prior art.

In particular the specific positioning of the temperature sensor ensures reliable measurement in the most critical zone of the tread: this way it is possible to detect when a critical temperature is reached in time and in a reliable manner and the phenomena of yielding and loss of efficacy of the glue can be prevented.

It is thus sufficient to monitor such temperature depending obviously on the specific material used for the tread. This way it is possible to intervene on the functioning parameters so as to prevent irreversible yielding of the tread from occurring. The intervention logic on process parameters may vary and may comprise, for example the reduction of the speed of translation of the trolley and thus of rotation of the wheels, the reduction of the load weighing on the wheels, the momentary stopping of the trolley, the use of cooling means of the wheel and/or ground and so forth.

It is also possible to memorise the functioning parameter history of an individual wheel, for example the temperature and/or pressure, so as for example to determine an average life or fatigue parameter and so forth.

The cost increase of the wheel fitted with sensors, compared to a wheel without them, is widely repaid given that the wheel will last a lot longer by virtue of the fact that any predefined condition of overheating to a limit value may be avoided. Overall, the average life of the wheel will be greatly increased compared to that of a wheel of the prior art.

As a result preventive and never corrective maintenance may be performed. In other words, the programmed replacement of the wheel may be performed upon reaching a determined average life, avoiding unforeseen downtime and maintenance of the trolleys due to sudden collapse of the wheels.

The positioning of the temperature sensor flush with the interface surfaces not only prevents damage to said sensor but also guarantees constantly reliable temperature values being provided.

In addition, the presence of a pressure sensor also makes it possible to detect when local overloads of the wheel occur, which if they were to reach the yielding point of the material would lead to irreversible deformations of the tread. In such case, the tread could be deformed on account of excessive load values alone, without as a result reaching limit temperature values.

In the case of reaching limit values the pressure sensor permits signalling of the danger so as to deal with replacement of the wheel due to its probable deformation or localised flattening on account of an excessive localised load. This way the replacement of a single wheel may assist the correct functioning of the remaining wheels which, in the case of localised flattening or permanent deformation of even a single wheel, could work in non-optimal conditions and also suffer a rapid deterioration with consequent premature replacement thereof.

A person skilled in the art may make numerous modifications and variations to the wheels for trolleys described above so as to satisfy contingent and specific requirements, while remaining within the scope of protection of the invention as defined by the following claims.

## Claims

1. Wheel for trolleys (4) comprising
- a hub (8) having a cylindrical seat (12) which defines a rotation axis (X-X) for the wheel (4), the hub (8) being defined by an outer cylindrical lateral wall (16),
- a tread (20) coaxial to the hub (8) in relation to the rotation axis (X-X), wherein the tread (20) has an inner wall (22) in direct contact with the outer cylindrical lateral wall (16) of the hub (8),
- wherein the hub (8) and the tread (20) are joined to each other by means of the interposition of an adhesive,
- the tread (20) is made in polymer material,
**characterised by** the fact that
- the tread (20) is solid,
- the wheel (4) comprises at least one temperature sensor (24) incorporated in the wheel structure,
wherein said temperature sensor (24) is applied at an interface (28) between the tread (20) and the hub (8),
wherein the outer cylindrical lateral wall (16) of the hub (8) comprises a first seat (32) inside which said temperature sensor (24) is housed.

2. Wheel for trolleys (4) according to claim 1, wherein the temperature sensor (24) is fully housed in said first seat (32) so as to present a measurement head (36) flush with said interface (28) and with the inner wall (22) of the tread (20).

3. Wheel for trolleys (4) according to any of the previous claims, wherein said first seat (32) comes out on a flattening (40) made on the outer lateral cylindrical wall (16) and directly facing the associable tread (20).

4. Wheel for trolleys (4) according to any of the previous claims, wherein the temperature sensor (24) is anchored to the inside of said first seat (32).

5. Wheel for trolleys (4) according to any of the previous claims, wherein the wheel (4) comprises a pressure sensor (44) applied at the interface (28) between the tread (20) and the hub (8), inside a second seat (48).

6. Wheel for trolleys (4) according to claim 5, wherein the pressure sensor (44) is a piezoelectric type sensor.

7. Wheel for trolleys (4) according to claim 5 or 6, wherein the pressure sensor (44) is a solidly anchored inside the second seat (48).

8. Wheel for trolleys (4) according to claim 5,6 or 7, wherein the pressure sensor (44) has a measurement head (36) positioned flush with said interface (28) and with the inner wall (22) of the tread (20).

9. Wheel for trolleys (4) according to any of the claims 5 to 8, wherein the pressure sensor (44) and the temperature sensor (24) are integrated with each other and housed in a single seat (52).

10. Wheel for trolleys (4) according to any of the previous claims, wherein the wheel (4) comprises a power supply and control unit operatively connected to said temperature and/or pressure sensor (44), so as to exchange the data acquired from said sensors in real time with a wireless system.

11. Method of making a wheel (4) for trolleys according to any of the previous claims, comprising the steps of:
- providing a hub (8) defined by an outer cylindrical lateral wall (16),
- making a first seat (32) on said outer cylindrical lateral wall (16),
- joining and solidly fixing a temperature sensor (24) inside said first seat (32), so that said temperature sensor (24) is flush with said outer cylindrical lateral wall (16),
- making a solid polymer tread (20) around said hub (8) previously coated with an adhesive, by casting, so as to cover the outer lateral wall (16) of the hub (8) with the relative temperature sensor (24).

12. Method according to claim 11, comprising the steps of:
- making a flattening (40) on the outer cylindrical lateral wall (16) before making the tread (20) by casting and before making the first seat (32) positioned in correspondence with said flattening (40).

13. Method according to claim 11 or 12, comprising the steps of:
- providing a pressure sensor (44) inside a second seat (48) made on the outer cylindrical lateral wall (16) of the hub (8),
- making a flattening (40) in correspondence with the second seat (48)
- joining the pressure sensor (44) firmly to the second seat (48) so as to bring a measurement head (36) of the pressure sensor (44) flush with the flattening on the outer lateral wall (16),
- making the polymer tread (20) on the hub (8) by casting so as to cover the temperature (24) and/or pressure sensor (44).

14. Method according to claim 13, comprising the steps of:
- providing a single seat (52) on the outer cylindrical lateral wall (16),
- joining a single pressure and temperature sensor (24,44) inside said single seat (48),
- making the polymer tread (20) on the hub (8)by casting so as to cover the temperature and pressure sensor (24,44).

## Patentansprüche

1. Ein Rad für Transportwagen (4), das Folgendes umfasst:
- eine Nabe (8), die einen zylindrischen Sitz (12) aufweist, der eine Drehachse (X-X) für das Rad (4) definiert, wobei die Nabe (8) durch eine äußere zylindrische Seitenwand (16) definiert ist,
- einen Laufstreifen (20), die in Bezug auf die Drehachse (X-X) koaxial zur Nabe (8) ist, wobei der Laufstreifen (20) eine Innenwand (22) aufweist, die in direktem Kontakt mit der äußeren zylindrischen Seitenwand (16) der Nabe (8) ist,
- wobei die Nabe (8) und der Laufstreifen (20) mittels der Zwischenlegung eines Klebstoffs miteinander verbunden sind,
- der Laufstreifen (20) aus Polymermaterial hergestellt ist,
**dadurch gekennzeichnet, dass**
- der Laufstreifen (20) massiv ist,
- das Rad (4) mindestens einen in die Radstruktur eingebundenen Temperatursensor (24) aufweist,
wobei der genannte Temperatursensor (24) im Bereich einer Schnittstelle (28) zwischen dem Laufstreifen (20) und der Nabe (8) angebracht ist,
wobei die äußere zylindrische Seitenwand (16) der Nabe (8) einen ersten Sitz (32) umfasst, in dem der genannte Temperatursensor (24) untergebracht ist.

2. Das Rad für Transportwagen (4) nach Anspruch 1, wobei der Temperatursensor (24) vollständig im ersten Sitz (32) untergebracht ist, um einen Messkopf (36) bündig mit der genannten Schnittstelle (28) und mit der Innenwand (22) des Laufstreifens (20) aufzuweisen.

3. Das Rad für Transportwagen (4) nach einem der vorhergehenden Ansprüche, wobei der genannte erste Sitz (32) auf einer Abflachung (40) herauskommt, die an der äußeren seitlichen zylindrischen Wand (16) ausgebildet ist und dem zugehörigen Laufstreifen (20) direkt zugewandt ist.

4. Das Rad für Transportwagen (4) nach irgendeinem der vorstehenden Ansprüche, wobei der Temperatursensor (24) an der Innenseite des genannten ersten Sitzes (32) verankert ist.

5. Das Rad für Transportwagen (4) nach irgendeinem der vorstehenden Ansprüche, wobei das Rad (4) einen Drucksensor (44) aufweist, der an der Schnittstelle (28) zwischen dem Laufstreifen (20) und der Nabe (8), innerhalb eines zweiten Sitzes (48) angebracht ist.

6. Das Rad für Transportwagen (4) nach Anspruch 5, wobei der Drucksensor (44) ein piezoelektrischer Sensor ist.

7. Das Rad für Transportwagen (4) nach Anspruch 5 oder 6, wobei der Drucksensor (44) fest im zweiten Sitz (48) verankert ist.

8. Das Rad für Transportwagen (4) nach Anspruch 5, 6 oder 7, wobei der Drucksensor (44) einen Messkopf (36) aufweist, der bündig mit der genannten Schnittstelle (28) und mit der Innenwand (22) des Laufstreifens (20) angeordnet ist.

9. Das Rad für Transportwagen (4) nach irgendeinem der Ansprüche von 5 bis 8, wobei der Drucksensor (44) und der Temperatursensor (24) miteinander integriert und in einem einzigen Sitz (52) untergebracht sind.

10. Das Rad für Transportwagen (4) nach irgendeinem der vorstehenden Ansprüche, wobei das Rad (4) eine Stromversorgungs- und Steuereinheit aufweist, die mit dem genannten Temperatur- und/oder Drucksensor (44) wirkverbunden ist, um die von den Sensoren erfassten Daten in Echtzeit mit einem drahtlosen System auszutauschen.

11. Ein Verfahren zur Herstellung eines Rades (4) für Transportwagen nach irgendeinem der vorstehenden Ansprüche, das die folgenden Schritte umfasst:
- Bereitstellen einer Nabe (8), die durch eine äußere zylindrische Seitenwand (16) definiert ist,
- Herstellen eines ersten Sitzes (32) an der genannten äußeren zylindrischen Seitenwand (16),
- Verbinden und fest Fixieren eines Temperatursensors (24) innerhalb des genannten ersten Sitzes (32), sodass der genannte Temperatursensor (24) mit der genannten äußeren zylindrischen Seitenwand (16) bündig ist,
- Herstellen eines massiven Polymer-Laufstreifens (20) um die genannte Nabe (8), die zuvor mit einem Klebstoff beschichtet wurde, im Gussverfahren, sodass die äußere Seitenwand (16) der Nabe (8) mit dem relativen Temperatursensor (24) bedeckt wird.

12. Das Verfahren nach Anspruch 11, das die folgenden Schritte umfasst:
- Herstellen einer Abflachung (40) an der äußeren zylindrischen Seitenwand (16) vor dem Herstellen des Laufstreifens (20) im Gussverfahren und vor dem Herstellen des ersten Sitzes (32), der in Übereinstimmung mit der genannten Abflachung (40) positioniert ist.

13. Das Verfahren nach Anspruch 11 oder 12, das die folgenden Schritte umfasst:
- Bereitstellen eines Drucksensors (44) innerhalb eines zweiten Sitzes (48), der an der äußeren zylindrischen Seitenwand (16) der Nabe (8) gewonnen wird,
- Herstellen einer Abflachung (40) in Übereinstimmung mit dem zweiten Sitz (48)
- fest Verbinden des Drucksensors (44) mit dem zweiten Sitz (48), um einen Messkopf (36) des Drucksensors (44) bündig mit der Abflachung an der äußeren Seitenwand (16) zu machen,
- Herstellen des Polymer-Laufstreifens (20) auf der Nabe (8) im Gussverfahren, sodass der Temperatur- (24) und/oder Drucksensor (44) abgedeckt wird.

14. Das Verfahren nach Anspruch 13, das die folgenden Schritte umfasst:
- Bereitstellen eines einzelnen Sitzes (52) an der äußeren zylindrischen Seitenwand (16),
- Verbinden eines einzelnen Druck- und Temperatursensors (24, 44) innerhalb des genannten einzelnen Sitzes (48),
- Herstellen des Polymer-Laufstreifens (20) auf der Nabe (8) im Gussverfahren, sodass der Temperatur- und Drucksensor (24, 44) abgedeckt wird.

## Revendications

1. Roue (4) pour des chariots, comprenant
- un moyeu (8) ayant un siège cylindrique (12) qui définit un axe de rotation (X-X) pour la roue (4), le moyeu (8) étant défini par une paroi latérale extérieure cylindrique (16),
- une bande de roulement (20) coaxiale au moyeu (8) par rapport à l'axe de rotation (X-X), la bande de roulement (20) ayant une paroi intérieure (22) en contact direct avec la paroi latérale extérieure cylindrique (16) du moyeu (8),
- le moyeu (8) et la bande de roulement (20) étant attachés l'un à l'autre par l'interposition d'un adhésif,
- la bande de roulement (20) étant réalisée en un matériau polymère,
**caractérisée par le fait que**
- la bande de roulement (20) est massive,
- la roue (4) comprend au moins un capteur de température (24) incorporé dans la structure de la roue,
le capteur de température (24) étant appliqué à une interface (28) entre la bande de roulement (20) et le moyeu (8),
la paroi latérale extérieure cylindrique (16) du moyeu (8) comprenant un premier siège (32) à l'intérieur duquel le capteur de température (24) est logé.

2. Roue (4) pour des chariots selon la revendication 1, **caractérisée en ce que** le capteur de température (24) est entièrement logé dans le premier siège (32) afin de présenter une tête de mesure (36) qui affleure l'interface (28) et la paroi intérieure (22) de la bande de roulement (20).

3. Roue (4) pour des chariots selon l'une des revendications précédentes, **caractérisée en ce que** le premier siège (32) sort à un méplat (40) réalisé sur la paroi latérale extérieure cylindrique (16) et directement en regard de la bande de roulement associée (20).

4. Roue (4) pour des chariots selon l'une des revendications précédentes, **caractérisée en ce que** le capteur de température (24) est ancré sur le côté intérieur du premier siège (32).

5. Roue (4) pour des chariots selon l'une des revendications précédentes, **caractérisée en ce que** la roue (4) comprend un capteur de pression (44) appliqué sur l'interface (28) entre la bande de roulement (20) et le moyeu (8), à l'intérieur d'un deuxième siège (48).

6. Roue (4) pour des chariots selon la revendication 5, **caractérisée en ce que** le capteur de pression (44) est un capteur de type piézoélectrique.

7. Roue (4) pour des chariots selon la revendication 5 ou 6, **caractérisée en ce que** le capteur de pression (44) est ancré de manière fixe à l'intérieur du deuxième siège (48).

8. Roue (4) pour des chariots selon la revendication 5, 6 ou 7, **caractérisée en ce que** le capteur de pression (44) comprend une tête de mesure (36) positionnée de façon à affleurer l'interface (28) et la paroi intérieure (22) de la bande de roulement (20).

9. Roue (4) pour des chariots selon l'une des revendications 5 à 8, **caractérisée en ce que** le capteur de pression (44) et le capteur de température (24) sont intégrés l'un avec l'autre et logés dans un seul siège (52).

10. Roue (4) pour des chariots selon l'une des revendications précédentes, **caractérisée en ce que** la roue (4) comprend une unité d'alimentation en énergie et de commande fonctionnellement reliée au capteur de température et/ou capteur de pression (44) afin d'échanger en temps réel les données acquises par les capteurs, avec un système sans fil.

11. Procédé de production d'une roue (4) pour des chariots selon l'une des revendications précédentes, comprenant les étapes de
- mettre à disposition un moyeu (8) défini par une paroi latérale extérieure cylindrique (16),
- agencer un premier siège (32) sur la paroi latérale extérieure cylindrique (16),
- ajouter et monter de manière fixe un capteur de température (24) à l'intérieur du premier siège (32) de façon que le capteur de température (24) affleure la paroi latérale extérieure cylindrique (16),
- former, par moulage, une bande de roulement solide en polymère (20) autour du moyeu (8) préalablement revêtu d'un adhésif, de façon à couvrir la paroi latérale extérieure cylindrique (16) du moyeu (8) avec le capteur de température relative (24).

12. Procédé selon la revendication 11, comprenant les étapes de
- former un méplat (40) sur la paroi latérale extérieure cylindrique (16) avant de former la bande de roulement (20) par moulage et avant d'agencer le premier siège (32) positionné par rapport au méplat (40).

13. Procédé selon la revendication 11 ou 12, comprenant les étapes de
- mettre à disposition un capteur de pression (44) à l'intérieur d'un deuxième siège (48) agencé sur la paroi latérale extérieure cylindrique (16) du moyeu (8),
- former un méplat (44) par rapport au deuxième siège (48),
- disposer le capteur de pression (44) fermement sur le deuxième siège (48) de façon à faire la tête de mesure (36) du capteur de pression (44) affleurer le méplat sur la paroi latérale extérieure (16),
- former, par moulage, la bande de roulement en polymère (20) sur le moyeu (8) de façon à couvrir le capteur de température (24) et/ou de pression (44).

14. Procédé selon la revendication 13, comprenant les étapes de
- mettre à disposition un seul siège (52) sur la paroi latérale extérieure cylindrique (16),
- disposer un seul capteur de pression et de température (24, 44) à l'intérieur dudit seul siège (48),
- former, par moulage, la bande de roulement en polymère (20) sur le moyeu (8) de façon à couvrir le capteur de température et de pression (24, 44).
